# EUROPÄISCHE PATENTSCHRIFT

(11) **EP 0 868 993 B1**
(45) Veröffentlichungstag und Bekanntmachung des Hinweises auf die Patenterteilung: **12.04.2000**
(21) Anmeldenummer: 98710002.1
(22) Anmeldetag: 20.02.1998
(51) Int. Cl.: B29C 51/26, B29C 51/42

(54) **Kühlvorrichtung im oder am Spannrahmen für Warmumformungsmaschinen**
Cooling means on or in the clamping frame of thermoforming apparatus
Moyens de refroidissement dans ou sur un cadre de fixation pour des appareils de thermoformage

(30) Priorität: 04.03.1997 DE 9708716 U
(43) Veröffentlichungstag der Anmeldung: 07.10.1998
(73) Patentinhaber: Adolf Illig Maschinenbau GmbH & Co, D-74081 Heilbronn (DE)
(72) Erfinder: Schwarzmann, Peter, 74081 Heilbronn (DE); Vogg, Martin, 74626 Bretzfeld (DE)

(56) Entgegenhaltungen:
- CH-A- 384 193
- US-A- 2 452 999
- US-A- 2 547 275
- US-A- 4 036 924

## Beschreibung

Die Erfindung betrifft eine Vorrichtung zum Verformen von erwärmten Platten oder Folienbahnabschnitten aus thermoplastischem Kunststoff nach der Gattung des Hauptanspruches. Bei einer solchen Vorrichtung wird die Taktzeit zur Herstellung eines Formteils wesentlich von der Kühlzeit des Formteiles beeinflußt, wobei insbesondere der Einspannbereich am längsten zur Abkühlung benötigt, da in diesem nur eine geringe Verstreckung des Kunststoffes erfolgt. Dieser Bereich ist deshalb entsprechend dick.

Aus der DE-AS 11 41 436 ist es bekannt, innerhalb der lichten Weite des Spannrahmens Rohre anzuordnen, aus denen zeitweise Blasluft zur Kühlung des Randes austritt. Beim Beheizen werfen diese Rohre jedoch einen Schatten auf die Kunststoffoberfläche, die an dieser Stelle weniger aufgeheizt wird als an anderen Bereichen. Dies führt zu verfahrenstechnischen Problemen beim Tiefziehen, weil sich der kältere Bereich weniger dehnt als der wärmere Bereich. Durch den Platzbedarf der Rohre kann das Formteil erst mit einem gewissen Abstand zum Spannrahmen beginnen, d. h. ein großer planer Rand verbleibt als Abfall.

Die US-A 2 547 275 zeigt eine Vorrichtung, bei der außerhalb eines höhenbeweglichen, in Form einer Glocke gestalteten Spannrahmens ortsfeste Rohre angeordnet sind, die von einer Ringleitung gespeist werden. Die Rohre treffen in abgesenkter Stellung des Spannrahmens auf gegenüber angeordnete Löcher in der Wandung des Spannrahmens, so daß der Innenraum der Glocke als Ganzes gekühlt wird. Eine gezielte Kühlung des Randbereiches ist nicht vorgesehen. Es ist erforderlich, Rahmen und Bohrungen zur Deckung zu bringen, was toleranzmäßig abgestimmt sein muß. Die Verbindungsstelle entläßt Luft an die Umgebung oder es müssen Dichtungen angeordnet werden, die durch die Bewegung einem Verschleiß unterliegen. Der Platzbedarf der starr angeordneten Rohre verhindert einen direkt an den Spannrahmen anschließenden Einbau einer Plattenbeschickungseinrichtung. Diese müßte auf Abstand gesetzt werden, wodurch sich der Abfall an Plattenmaterial entsprechend erhöhen würde.

Der Erfindung liegt die Aufgabe zugrunde, die Kühlluftzufuhr zu den Öffnungen im Spannrahmen so vorzunehmen, daß hierdurch eine gleichmäßige Erwärmung des innerhalb des Spannrahmens eingespannten Bereiches nicht behindert wird. Die Einrichtung zur Kühlluftzufuhr sollte eine Anordnung einer Plattenbeschickungseinrichtung außerhalb des Spannrahmens nicht erschweren und keinen erhöhten Abfall an Plattenmaterial zur Folge haben. Die Gefahr einer Leckage von Kühlluft und eines Verschleißes von Dichtungen sollte nicht gegeben sein.

Zur Lösung der Aufgabe werden die kennzeichnenden Merkmale des Hauptanspruches vorgeschlagen.

Ein Ausführungsbeispiel der Erfindung und vorteilhafte Weiterbildungen sind anhand der schematischen Zeichnungen näher beschrieben.

Es zeigt:
- Figur 1:: Eine Längsdarstellung der Vorrichtung

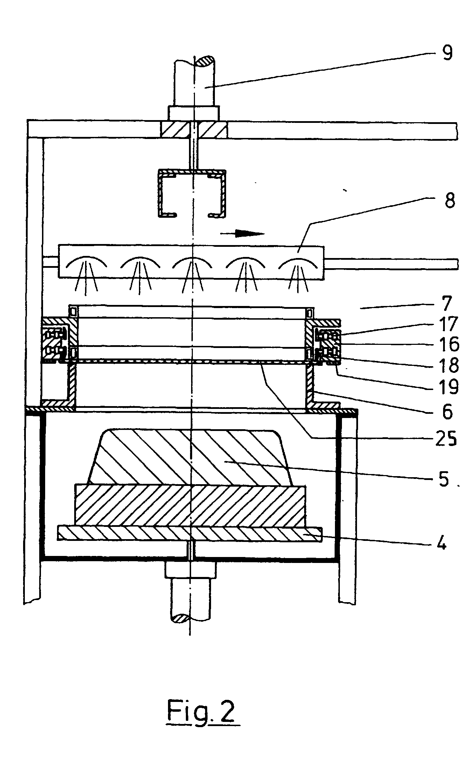

- Figur 2:: Einen Querschnitt durch die Formstation der Vorrichtung vor der Verformung
- Figur 3:: Einen Schnitt durch den Spannrahmenbereich nach der Verformung
- Figur 4/5:: Verschiedene Ausführungsformen des Spannrahmens.

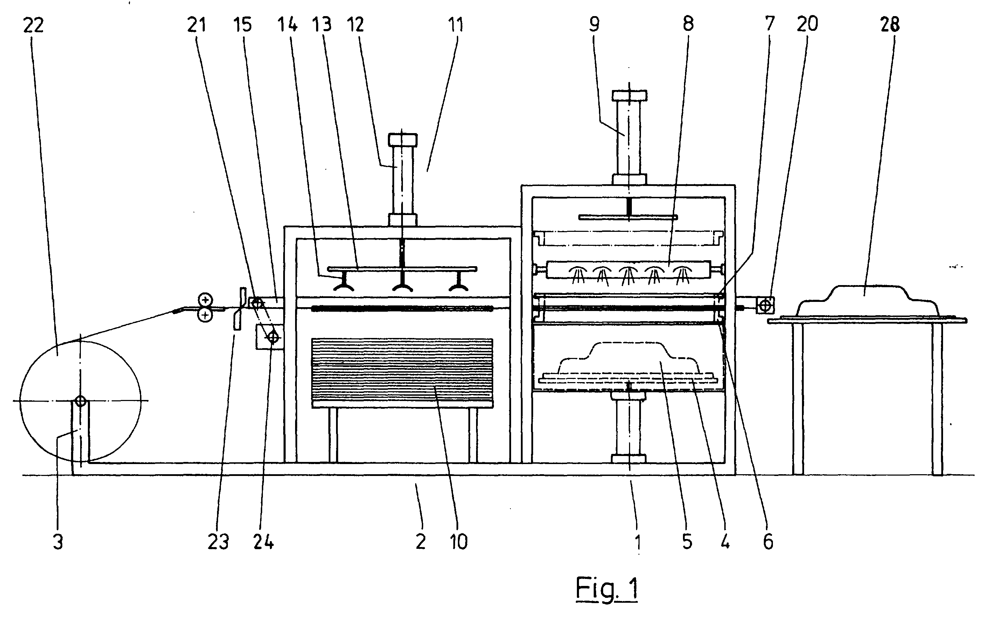

In Figur 1 ist ein Ausführungsbeispiel einer gesamten Vorrichtung dargestellt, bei der die Erfindung angewandt werden kann. Sie besteht aus den Stationen Formstation 1, Beschickungsstation 2 und ggf. der Rollenaufnahme 3. Die Formstation 1 weist auf einen höhenbeweglichen Tisch 4 zur Aufnahme einer Tiefziehform 5, einen festen unteren Spannrahmen 6, einen beweglichen oberen Spannrahmen 7, eine Heizung 8 und ggf. einen Streckhelfer 9.

Wenn die Vorrichtung vom Plattenstapel arbeitet, wird in die Beschickungsstation 2 ein Plattenstapel 10 eingeschoben. Eine Hubeinrichtung 11, bestehend aus dem Pneumatikzylinder 12, einem Träger 13 und daran befestigten Vakuumsaugern 14, hebt die oberste Platte ab und führt sie in den Transport 15 ein, der zwischen Beschickungsstation 2 und Formstation 1 verläuft. Dieser Transport setzt sich aus Führungen 16 für die Transportketten 17 mit Mitnehmern 18 und einer entsprechend gestalteten Gegenleiste 19 zusammen. Durch Umlenkräder 20, 21 werden die Transportketten 17 umgelenkt, sie verlaufen parallel zueinander und greifen an zwei gegenüberliegenden Rändern der Kunststoffplatte 25 an. Ein Motor 24 dient dem intermittierenden Antrieb des Transportes 15.

Wenn mit der Vorrichtung von der Folienrolle 22 gearbeitet werden soll, wird diese in die Rollenaufnahme 3 eingelegt und die Folienbahn in den Transport 15 eingeführt. Nach einer vorgegebenen Vorschublänge wird der abgezogene Abschnitt von einem Querschneider 23 abgetrennt und dann zur Formstation 1 transportiert.

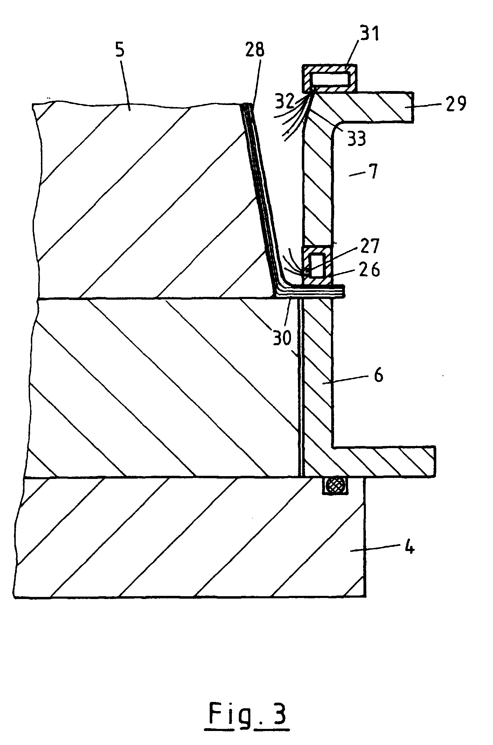

Figur 3 zeigt eine Ausführungsform der Neuerung. Der obere Spannrahmen 7 besteht aus einem Profil 29, rechteckig oder winklig wie dargestellt, und dieses trägt an der der Platte 25 zugewandten Stirnseite ein ringsum verlaufendes Rechteckrohr 26. In dessen dem Formteil 28 zugewandten Wandung sind Öffnungen 27 vorgesehen. Das Rechteckrohr 26 steht mit einer nicht dargestellten Druckluftquelle in Verbindung, so daß - geschaltet über ein Ventil - jederzeit kurzfristig Druckluft ins Innere des Vierkantrohres 26 geleitet werden kann. Diese Druckluft strömt durch die Öffnungen 27 und kühlt das Formteil 28 im Bereich des Spannrandes 30. Dabei können die Öffnungen 27 als Bohrungen oder als Schlitze ausgebildet sein.

Eine Verbesserung der Kühlung des Formteiles 28 im Bereich des Spannrandes 30 läßt sich dadurch erzielen, daß an der Oberseite des Profiles 29 analog ein weiteres Rechteckrohr 31 mit Öffnungen 32 angeordnet wird. Eine Schräge 33 am Profil 29 führt bei der dargestellten bündigen Anordnung des Vierkantrohres 31 zu einer guten Luftführung in Richtung des Spannrandes 30.

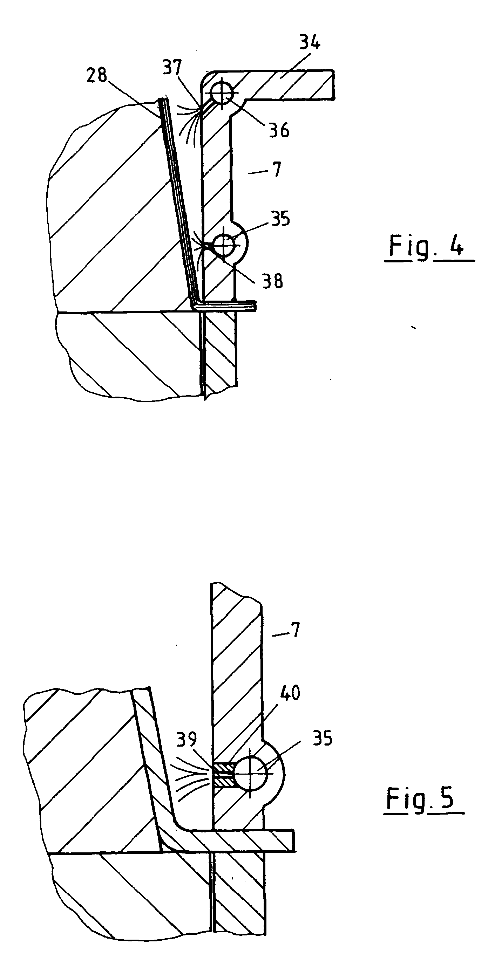

Wenn der Spannrahmen 7 aus fertigen Profilen, z. B. aus Aluminium, zusammengesetzt wird, ist es möglich, ein einteiliges Profil 34, wie in Figur 4 dargestellt, einzusetzen. In diesem sind eine oder mehrere Bohrungen 35, 36 vorgesehen, die dann entsprechend mit Öffnungen 37, 38 zum Austritt der Kühlluft versehen sind.

Bei der Vorrichtung werden oft universelle Spannrahmen eingesetzt, zumindest im Bereich der Längsstege. Entsprechende Querstege werden vom Format abhängig eingesetzt. Um die Größe der Öffnungen zum Blasen anpassen oder auch teilweise verschließen zu können, wird eine Ausführungsform gemäß Figur 5 vorgeschlagen. In diesem Fall befinden sich die Öffnungen 39 in einem auswechselbaren Gewindestift 40. Bei Bedarf können folglich Öffnungen dadurch verändert werden, daß Gewindestifte 40 ohne Öffnung 39 oder mit kleinerem/größerem Querschnitt eingeschraubt werden.

Die Vorrichtung arbeitet wie folgt: Wenn die Vorrichtung vom Plattenstapel 10 arbeitet, wird die oberste Platte durch die Hubeinrichtung 11 angehoben und in den Transport 15 eingeführt. Dieser bringt sie in die Formstation 1, in der sie zwischen den Spannrahmen 6, 7 eingespannt, von der Heizung 8 erwärmt und nach dem Anheben des Tisches 4 mit der Tiefziehform 5 durch Vakuum verformt wird. Das fertige Formteil 28 wird abgekühlt, einerseits durch Kühlgebläse, andererseits durch Kühlluft, die durch die Öffnungen 27, 32, 37, 38, 39 im Bereich des Spannrahmens 7 austritt. Anschließend wird das Formteil 28 entformt und austransportiert.

Arbeitet die Vorrichtung von der Folienrolle 22 wird diese vom Querschneider 23 in Zuschnitte zerteilt und diese werden in gleicher Weise verarbeitet. Die Erfindung kann aber genauso Anwendung finden bei einer Vorrichtung, die nur von der Folienrolle 22 arbeitet und keinen Querschneider 23 aufweist. In diesem Fall wird ein zusammenhängendes Band von Formteilen erzeugt, die in einer nachfolgenden Station ausgetrennt werden. Bei einer solchermaßen ausgebildeten Vorrichtung kann die Heizung 8 der Formstation vorgeschaltet sein, und zwar im Bereich der Beschickungsstation 2, die ja dann nicht vorhanden ist.

Die Erfindung ist genauso anwendbar bei einer Vorrichtung, die nur aus einer Formstation 1 mit Heizung 8, Spannrahmen 6, 7 und Tisch 4 mit Tiefziehform 5 besteht und bei der das Beschicken mit Platten 25 und das Entnehmen der Formteile 28 von Hand erfolgt.

## Patentansprüche

1. Vorrichtung zum Verformen von erwärmten Platten oder Folienbahnabschnitten (25) aus thermoplastischem Kunststoff durch Differenzdruck, bestehend aus einer Formstation (1) mit einem Tisch (4), einer Tiefziehform (5) und zwei Spannrahmen (6, 7) zum Einspannen der Platte bzw. des Folienbahnabschnittes (25), mit Öffnungen (27, 32, 37, 38, 39) im Spannrahmen (7) zum Zuführen von Druckluft zur Kühlung des Formteils (28) sowie mit Zuführeinrichtungen für die Druckluft zu diesen Öffnungen (27, 32, 37, 38, 39) dadurch gekennzeichnet, daß die Druckluft durch das Innere von Hohlprofilen (26, 31) des Spannrahmens (7) bzw. durch längs verlaufende Bohrungen (35, 36) in den den Spannrahmen (7) bildenden Profilen (34) geführt wird, bevor sie aus den dem Formteil (28) zugewandten Öffnungen (27, 32, 37, 38, 39) austritt.

2. Vorrichtung nach Anspruch 1 dadurch gekennzeichnet, daß die Öffnungen (39) zum Auslaß der Kühlluft in Gewindestifte(40) eingebracht sind, die in den Profilen (34) in der Wandung zu den Bohrungen (35, 36) angeordnet sind.

3. Vorrichtung nach Anspruch 1 oder 2 dadurch gekennzeichnet, daß die Öffnungen (27, 32, 37, 38, 39) als Bohrungen ausgebildet sind.

4. Vorrichtung nach Anspruch 1 oder 2 dadurch gekennzeichnet, daß die Öffnungen (27, 32, 37, 38,39) als Schlitze ausgebildet sind.

## Claims

1. Device for deforming heated sheets or foil strip portions (25) of thermoplastic synthetic material by differential pressure, consisting of a moulding station (1) with a table (4), a deep-drawing mould (5) and two clamping frames (6, 7) for clamping-in the sheet or foil strip portion (25), with openings (27, 32, 37, 38, 39) in the clamping frame (7) for the feed of compressed air for cooling the mould part (28) as well as with feed devices for the compressed air to these openings (27, 32, 37, 38, 39), characterised in that the compressed air is fed through the interior of hollow profiles (26, 31) of the clamping frame (7) or through longitudinally extending bores (35, 36) into the profiles (34) forming the damping frame (7) before it exits from the openings (27, 32, 37, 38, 39) facing the mould part (28).

2. Device according to claim 1, characterised in that the openings (39) for the exit of the cooling air are formed in threaded pins (40), which are arranged in profiles (34) in the walling to the bores (35, 36).

3. Device according to claim 1 or 2, characterised in that the openings (27, 32, 37, 38, 39) are formed as bores.

4. Device according to claim 1 or 2, characterised in that the openings (27, 32, 37, 38, 39) are formed as slots.

## Revendications

1. Dispositif de formage de plaques ou de flancs de bandes chauffées 25 en matière thermoplastique par pression différentielle, comprenant une station de moulage (1) avec un plateau (4), un moule d'emboutissage profond (5) et deux châssis tendeurs (6, 7) pour fixer la plaque ou le segment de feuille découpée (25) avec des ouvertures (27, 32, 37, 38, 39) dans le châssis tendeur (7) pour fournir l'air comprimé servant à refroidir la pièce de forme (28) ainsi que des installations d'alimentation en air comprimé des ouvertures (27, 32, 37, 38, 39),
caractérisé en ce que
l'air comprimé est guidé à travers l'intérieur des profilés creux (26, 31) du châssis tendeur (7) ou à travers des perçages longitudinaux (35, 36) dans les profilés (34) formant le châssis de guidage (7), avant de sortir des ouvertures (27, 32, 37, 38, 39), tournées vers la pièce moulée (28).

2. Dispositif selon la revendication 1,
caractérisé en ce que
les ouvertures (39) pour la sortie de l'air de refroidissement, sont prévues dans les taraudages (40) disposée dans les profilés (34) dans la paroi vers les perçages (35, 36).

3. Dispositif selon la revendication 1 ou 2,
caractérisé en ce que
les ouvertures (27, 32, 37, 38, 39) sont des perçages.

4. Dispositif selon l'une des revendications 1 ou 2,
caractérisé en ce que
les ouvertures (27, 32, 37, 38, 39) sont des fentes.
